# EUROPÄISCHE PATENTANMELDUNG

(11) **EP 2 511 566 A2**
(43) Veröffentlichungstag der Anmeldung: **17.10.2012**
(21) Anmeldenummer: 12162454.8
(22) Anmeldetag: 30.03.2012
(51) Int. Cl.: F16F 15/12

(54) **Verfahren zur Herstellung eines Schwungrads**

(30) Priorität: 07.04.2011 DE 102011001881
(71) Anmelder: Mühlhoff Umformtechnik GmbH, 47589 Uedem (DE)
(72) Erfinder: Paeßens, Dirk, 47589 Uedem (DE)
(74) Vertreter: Fritz, Edmund Lothar

(57) **Zusammenfassung**

Die vorliegende Erfindung betrifft ein Verfahren zur Herstellung eines insbesondere für ein Kraftfahrzeug vorgesehenen Schwungrads, welches dadurch gekennzeichnet ist, dass man ein Dämpfungsblechteil (16) aus einem Verbundwerkstoff umfassend eine Schicht aus Stahlblech und eine viskoelastische Dämmschicht in einem Fügeprozess unter Druck mit einem für das Schwungrad vorgesehenen metallischen Basiselement (10) dauerhaft fest zu einem Sandwichbauteil verbindet. Auf diese Weise lässt sich ein Schwungrad herstellen, welches vibrationsdämmende und geräuschdämmende Eigenschaften aufweist. Diese Schwungräder sind insbesondere für Anlasser in Fahrzeugen mit Start/Stopp-Einrichtungen vorteilhaft, da dort häufige Anlassvorgänge auftreten.

## Beschreibung

Die vorliegende Erfindung betrifft ein Verfahren zur Herstellung eines Schwungrads sowie ein nach diesem Verfahren hergestelltes Schwungrad.

Schwungräder im Sinne der vorliegenden Erfindung sind insbesondere Schwungräder für Fahrzeuge wie PKWs und LKWs und zwar sowohl so genannte Automatik-Schwungräder als auch manuelle Schwungräder (Zweimassenschwungräder), wie sie beispielsweise in der Start/Stopp-Automatik von Kraftfahrzeugen verwendet werden, aber auch bei Fahrzeugen ohne Start-Stopp-Automatik verwendete Schwungräder, also Standard-Schwungräder oder auch Schwungräder für jegliche andere Getriebevarianten.

Nachteilig bei den bekannten Schwungrädern, die zum Anlassen verwendet werden, sind die störenden Geräusche, die beim Anlassvorgang entstehen.

In der DE 602 19 270 T2 ist ein schalldämpfendes Anlassschwungrad beschrieben, bei dem zwischen der am äußeren Umfangsendabschnitt eines Trägers liegenden radialen Fläche und der am inneren Umfangsendabschnitt eines Zahnkranzes liegenden radialen Gegenfläche ein Element aus einem viskoelastischen Material angeordnet ist, welches in radialer und in axialer Richtung unter Druckspannung gesetzt wird. Bei diesem Element handelt es sich um eine Ringdichtung, die in eine Nut des Trägers eingedrückt und dadurch unter Spannung gesetzt wird.

Die DE 600 08 991 T2 beschreibt ein Schwungrad eines Verbrennungsmotors mit Anlasszahnkranz. Um den Lärmpegel beim Anlassen zu senken, wird hier zwischen einer Umfangsfläche eines Trägers des Schwungrads und einer komplementären Umfangsfläche eines auf dem Schwungrad befestigten Zahnkranzes ein Ring aus einem verformbaren elastomeren Material durch Kleben angebracht. Zusätzlich kann eine Auskleidung aus Elastomer oder Plastomer auf einer radialen Oberfläche zwischen Träger und Zahnkranz befestigt werden, welche etwa rechtwinklig zu der Umfangsfläche verläuft, um auf diese Weise einen Gleitkontakt zwischen dem Träger und dem Zahnkranz zu erlauben. Die Geräuschminderung soll somit hier erzielt werden, indem man eine Verformung des Zahnkranzes radial zur Welle des Schwungrads zulässt.

Ausgehend von dem zuvor genannten Stand der Technik besteht die Aufgabe der vorliegenden Erfindung darin, ein alternatives Verfahren zur Herstellung eines Schwungrads zur Verfügung zu stellen, welches zu einem Schwungrad mit vibrationsdämmenden und geräuschdämmenden Eigenschaften führt. Aufgabe der vorliegenden Erfindung ist es weiterhin, ein Schwungrad mit diesen Eigenschaften zur Verfügung zu stellen.

Die Lösung dieser Aufgabe liefert ein Verfahren zur Herstellung eines Schwungrads der eingangs genannten Gattung mit den kennzeichnenden Merkmalen des Hauptanspruchs bzw. ein Schwungrad mit den Merkmalen des Anspruchs 11. Erfindungsgemäß ist vorgesehen, dass man ein Dämpfungsblechteil aus einem Verbundwerkstoff umfassend eine Schicht aus Stahlblech und eine viskoelastische Dämmschicht in einem Fügeprozess unter Druck und teilweiser Umformung mit einem als Schwungrad vorgesehenen metallischen Basiselement dauerhaft fest zu einem Sandwichbauteil verbindet. Alternativ kann auch eine Dämmschicht und /oder ein Klebstoff mit ähnlicher Materialeigenschaft eingesetzt werden.

Im Gegensatz zum Stand der Technik wird somit das dort als Träger bezeichnete Bauteil für das Schwungrad aus mehreren Schichten in Sandwichbauweise aufgebaut, von denen mindestens eine Schicht, vorzugsweise eine innenliegende Schicht eine viskoelastische Dämmschicht ist. Die Dämmung erfolgt somit nicht zwischen Träger und Zahnkranz des Schwungrads, sondern quasi im Trägerbauteil des Schwungrads selbst und dabei vollflächig, so dass das Trägerbauteil im wesentlichen über seine gesamte Flächenerstreckung schwingungs- und geräuschdämpfend ausgebildet ist. Beim Fügevorgang werden mehrere im Prinzip runde Elemente mit scheibenförmiger Grundform in Richtung Ihrer Achse so gefügt, dass sie anschließend einen mehrschichtigen Verbund bilden, wobei sie sich mit ihren einander zugewandten Oberflächen miteinander verbinden. Dämpfungsblechteil und Basiselement haben jeweils etwa eine ähnliche scheibenartige geometrische Form im Umriss und sie können außerdem zusätzlich auch jeweils einander entsprechende Verformungen senkrecht zur Ebene der Scheibenform aufweisen. Bedingt durch die erfindungsgemäße Vorgehensweise ist die viskoelastische Dämmschicht nach dem Fügevorgang in allen relevanten Flächenbereichen des Verbundbauteils vorhanden.

Vorzugsweise wird dabei zunächst das metallische Basiselement mindestens teilweise entsprechend der Form des Schwungrads vorgeformt und an diesem werden gegebenenfalls Lochungen oder Ausstanzungen vorgenommen, wobei man bevorzugt das Dämpfungsblechteil aus dem Verbundwerkstoff ebenfalls mindestens teilweise entsprechend der Form des Schwungrads vorformt und gegebenenfalls an diesem Lochungen oder Ausstanzungen vornimmt und man dann beide Teile unter Druck miteinander fügt, wobei bei diesem Fügevorgang die viskoelastische Dämmschicht des Blechteils dem Basiselement zugewandt ist. Auf diese Weise verklebt quasi die viskoelastische Dämmschicht mit dem metallischen Basiselement, so dass eine Sandwichanordnung entsteht, bestehend aus der Blechlage des Basiselements und der Blechschicht des Dämpfungsblechteils, zwischen denen die Schwingungen und Geräusche dämpfende viskoelastische Schicht angeordnet ist. Die gesamte Anordnung wird bei diesem Fügevorgang so verpresst, dass sich die Ausgangslagen dauerhaft fest miteinander verbinden.

Die Grundform des Schwungrads kann dabei von dem metallischen Basiselement vorgegeben werden und bei dem Fügeprozess schmiegt sich quasi das zweischichtige Verbundmaterial formschlüssig an diese Grundform an, so dass danach ein Schwungrad in der gewünschten Form mit einem mindestens dreischichtigen Aufbau erhalten wird. Da die viskoelastische Schicht oder alternative Schicht nun zwischen zwei Blechschichten liegt, hat diese eine dämmende Wirkung, die Störgeräusche jeglicher Art bei dem Schwungrad verhindert.

Zusätzlich kann man diverse Maßnahmen vorsehen, um eine bessere gegenseitige Fixierung der beiden Elemente in dem Fügevorgang zu erreichen. Dazu kann man beispielsweise vorsehen, dass der Fügevorgang von metallischem Basiselement und Dämpfungsblechteil aus Verbundwerkstoff eine geometrische Verformung des Basiselements und/oder des Dämpfungsblechteils umfasst. Beispielsweise kann vorgesehen sein, dass eine zusätzliche Fixierung beider Bauteile durch Einclipsen des Dämpfungsblechteils am metallischen Basiselement erzielt wird.

Beispielsweise kann es vorteilhaft sein, wenn der Fügevorgang von metallischem Basiselement und Blechteil aus Verbundwerkstoff ein Durchsetzfügen (Clinchen) umfasst. Durch die Clinchpunkte wird eine zusätzliche Fixierung beider Bauteile erzielt.

Ebenfalls vorteilhaft kann es sein, wenn der Fügevorgang von metallischem Basiselement und Dämpfungsblechteil aus Verbundwerkstoff eine zusätzliche Fixierung beider Bauteile durch Haltelaschen umfasst.

Im Rahmen der vorliegenden Erfindung kommen grundsätzlich die verschiedensten Werkstoffpaarungen in Betracht. Vorzugsweise besteht das metallische Basiselement aus einem unlegierten kaltumformbaren Stahlblech. Die viskoelastische Dämmschicht des Dämpfungsblechteils kann zum Beispiel ein Polyacrylatharz umfassen. Das Verbundmaterial des Dämpfungsblechteils wird in der Regel so geliefert, dass die klebrige viskoelastische Schicht zunächst durch eine Schutzfolie geschützt ist, die dann für den Fügevorgang abgezogen wird. Die Bauteile können jedoch auch mit Klebstoffen verklebt werden, die vor dem Fügen flüssig aufgebracht werden, um dann auszuhärten bis zum dauerelastischen Zustand.

Das Fügen des metallischen Basiselements mit dem zwei- oder gegebenenfalls mehrschichtigen Dämpfungsbauteil geschieht bevorzugt unter einer Presse, wobei der beim Fügevorgang auszuübende Druck naturgemäß von der Werkstoffpaarung abhängt, wobei aber in der Regel mindestens ein Anpressdruck von etwa 2 bar auf die zu verbindenden Bauteile ausgeübt wird.

Nach dem Fügevorgang schließen sich in der Regel weitere Arbeitsgänge an, beispielsweise Umform- und Beschneideoperationen, wobei derartige Verfahrensgänge natürlich auch vor dem Fügevorgang stattfinden können. In der Regel wird zudem nach dem Fügeprozess an dem Schwungrad ein äußerer Zahnkranz angebracht. Weitere Bauelemente des Schwungrads können beispielsweise angenietet, geschweißt oder angeschraubt werden.

Gegenstand der vorliegenden Erfindung ist weiterhin ein für einen Anlasser eines Kraftfahrzeugs vorgesehenes Schwungrad, welches nach einem Verfahren gemäß einem der Ansprüche 1 bis 10 hergestellt ist. Ein solches Schwungrad kann in einem Kraftfahrzeug beispielsweise im Bereich einer Start/Stopp-Einrichtung eingesetzt werden. Durch die erfindungsgemäße Geräuschdämpfung werden in vorteilhafter Weise die beim Anlassen entstehenden störenden Geräusche stark reduziert, was insbesondere bei Kraftfahrzeugen mit diesen Einrichtungen vorteilhaft ist, da bei diesen Anlassvorgänge erheblich häufiger vorkommen als bei konventionellen Fahrzeugen. Jedoch ist der Einsatz der erfindungsgemäßen Schwungräder ebenso bei Kraftfahrzeugen mit herkömmlichen Anlassern sinnvoll.

Die in den U nteransprüchen beschriebenen Merkmale betreffen bevorzugte Weiterbildungen der erfindungsgemäßen Aufgabenlösung. Weitere Vorteile der vorliegenden Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher erläutert. Dabei zeigen:
Figur 1 eine perspektivische Ansicht eines metallischen Basiselements für ein erfindungsgemäßes Schwungrad;
Figur 2 eine perspektivische Ansicht eines zweischichtigen Dämpfungsblechteils für ein erfindungsgemäßes Schwungrad;
Figur 3 eine schematisch vereinfachte Schnittansicht von Basiselement und Dämpfungsblechteil während des Fügevorgangs;
Figur 4 eine perspektivische Ansicht der miteinander verbundenen Elemente des Schwungrads nach dem Fügevorgang;
Figur 5 eine Ansicht eines fertigen Schwungrads, welches nach dem erfindungsgemäßen Verfahren hergestellt wurde.

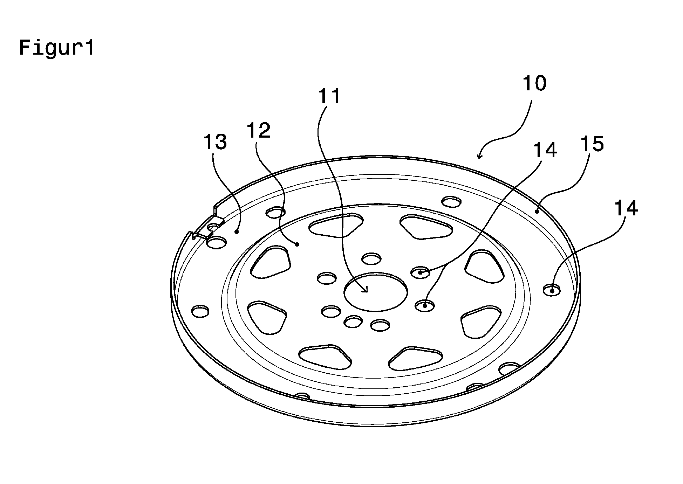

Es wird nun nachfolgend zunächst auf die Figur 1 Bezug genommen, welche das metallische Basiselement 10 als eine erste Komponente für das erfindungsgemäße Schwungrad zeigt. Das Basiselement ist ein vorgeformtes Blechteil, beispielsweise aus Stahlblech, welches entsprechend den Funktionen des herzustellenden Schwungrads diverse Lochungen und Ausstanzungen aufweist. So weist das Basiselement 10 beispielsweise ein mittiges Loch 11 auf. Der innere ringförmige Bereich 12 des Basiselements 10 ist erhaben, wohingegen sich der daran radial nach außen hin anschließende äußere Ring 13 tiefer liegt. In dem inneren ringförmigen Bereich 12 sind verschiedene runde Lochungen 14 vorgesehen, ebenso wie in dem äußeren Ring 13 diverse runde Lochungen 14 vorhanden sind. Am äußeren Umfang weist das Basiselement 10 einen aus der Ebene des äußeren Rings etwa rechtwinklig abgekanteten äußeren Steg 15 auf. Weiterhin sind in dem erhabenen inneren Ring 12 noch über den Umfang verteilt dreieckige Lochungen 19 vorhanden. Auf das Lochmuster, die Form und Anzahl der diversen Löcher kommt es im Rahmen der vorliegenden Erfindung nicht an, da es vielmehr prinzipiell um die Art der Herstellung und den Aufbau des erfindungsgemäßen Schwungrads geht.

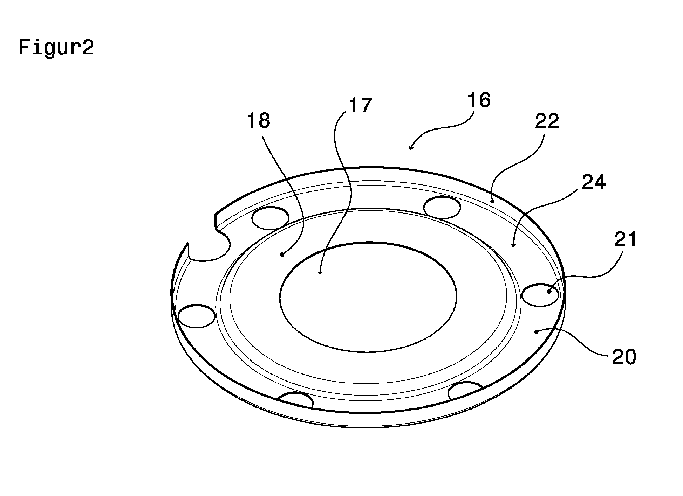

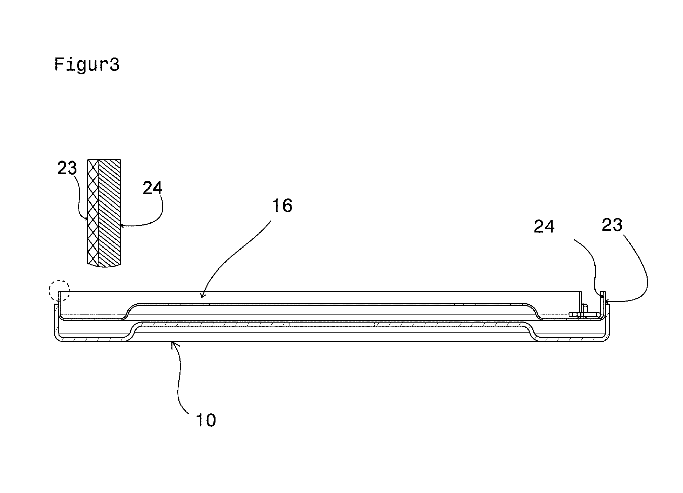

In Figur 2, auf die nachfolgend Bezug genommen wird, ist in perspektivischer Darstellung das zweischichtige Dämpfungsblechteil 16 gezeigt, welches bei der Herstellung des Schwungrads mit dem zuvor beschriebenen Basiselement 10 gefügt wird. Dieses Dämpfungsblechteil 16 ist ein Bauteil aus einem Verbundwerkstoff und umfasst eine in der Zeichnung obere Blechschicht 24 und eine in Figur 2 nicht erkennbare viskoelastische Schicht 23, die sich an der Unterseite des Blechteils 16 befindet und damit bei dem Fügevorgang dem in Figur 1 gezeigten Basiselement 10 zugewandt ist. Das Dämpfungsblechteil 16 weist ein mittiges Loch 17 auf, welches größer ist als das mittige Loch 11 des Basiselements 10. An das mittige Loch schließt sich radial nach außen hin ein erhabener innerer Ring 18 an, an den sich wiederum radial nach außen hin ein tiefer liegender äußerer Ring 20 anschließt, wobei das Dämpfungsblechteil weiterhin einen aus der Ebene des äußeren Rings 20 etwa rechtwinklig nach oben hin abgekanteten äußeren Steg 22 aufweist. Auch das Dämpfungsblechteil 16 ist somit ein bereits vorgeformtes Bauteil, dessen Grundform derjenigen des zuvor beschriebenen Basiselements 10 ähnelt, so dass es möglich ist, bei dem anschließenden Fügevorgang die beiden Bauteile 10 und 16 übereinander zu bringen und in einer Presse zu einem das wesentliche Element des Schwungrads bildenden Bauteil zu fügen, so wie dies in Figur 3 gezeigt ist, welche die beiden Bauteile vor dem Fügevorgang zeigt. Bei diesem Fügevorgang liegt die viskoelastische Dämmschicht 23 des Dämpfungsblechteils 16 unten und somit ist sie dem Basiselement 10 zugewandt. Es wird auf die vergrößerte Darstellung eines Ausschnitts aus dem Dämpfungsblechteil 16 gemäß der kleinen Darstellung in Figur 3 links verwiesen. Werden die beiden Bauteile nun unter Druck gefügt, dann verbindet sich die klebrige viskoelastische Schicht mit dem Blech des Basiselements 10, so dass ein dreischichtiges Sandwichbauteil entsteht, bestehend aus der oberen Blechlage des Dämpfungselements 16, der viskoelastischen Dämmschicht 23 als Zwischenschicht und der unteren Blechlage des Basiselements 10.

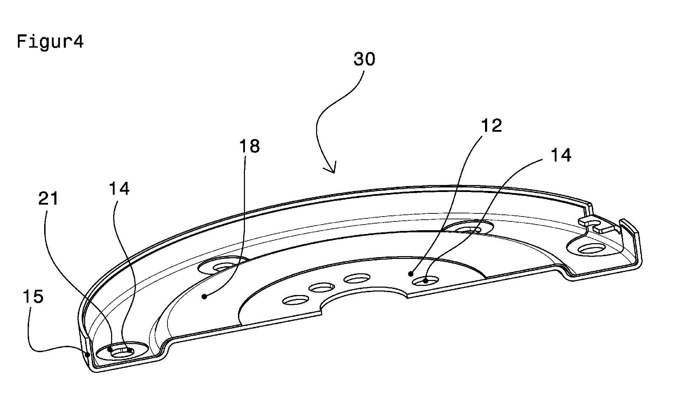

Bei dem Fügeprozess unter Druck werden die beiden Bauteile 10, 16 nicht nur dauerhaft fest miteinander zu einem Sandwichbauteil verbunden, sondern sie können zusätzlich beispielsweise durch Durchsetzfügen (Clinchen) so verformt werden, dass sich eine bessere gegenseitige Fixierung ergibt. Figur 4 zeigt das gefügte Sandwichbauteil 30 in perspektivischer Ansicht. Man erkennt beispielsweise im mittigen Bereich, dass hier die beiden Ausgangselemente 10, 16 übereinander liegen, denn wegen des größeren mittigen Lochs 17 endet der erhabene innere Ring 18 des oben liegenden Dämpfungsblechteils bereits radial weiter außen und man kann den inneren Bereich des erhabenen Rings 12 des Basiselements mit den Lochungen 14 daher in Figur 4 erkennen, da dieser Bereich bei dem Sandwichbauteil 30 freiliegt. Des Weiteren sieht man in Figur 4 auch, dass unter den größeren runden Lochungen 21 in konzentrischer Anordnung die kleineren runden Lochungen 14 liegen.

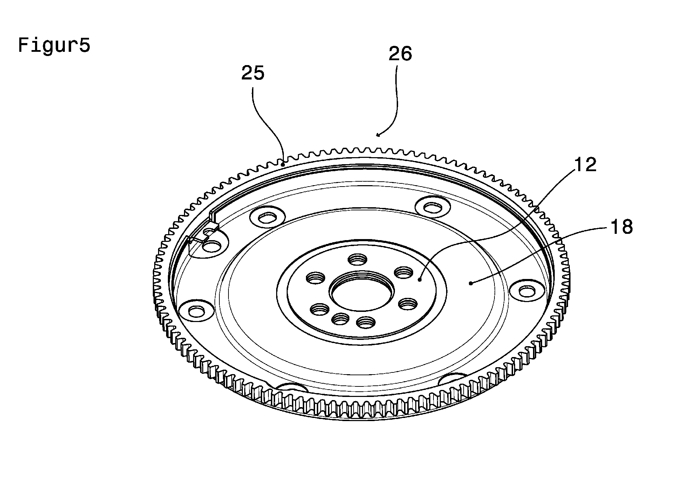

Nach der Herstellung des Sandwichbauteils 30 erfolgen noch weitere Arbeitsgänge für die Herstellung des fertigen Schwungrads 26, welches in perspektivischer Darstellung in Figur 5 gezeigt ist. Dabei wird unter anderem außen an dem äußeren abgekanteten Steg 15 ein Zahnkranz 25 angebracht, beispielsweise angeschweißt, so dass dann dort beispielsweise ein Ritzel eingreifen kann, wenn das Schwungrad in einer Start/Stopp-Vorrichtung eines Anlassers verwendet wird.

### Bezugszeichenliste

- 10: Basiselement
- 11: mittiges Loch
- 12: erhabener innerer Ring
- 13: tiefer liegender äußerer Ring
- 14: Lochungen
- 15: abgekanteter äußerer Steg
- 16: Dämpfungsblechteil
- 17: mittiges Loch
- 18: erhabener innerer Ring
- 19: dreieckige Lochungen
- 20: tiefer liegender äußerer Ring
- 21: runde Lochungen
- 22: abgekanteter äußerer Steg
- 23: viskoelastische Schicht
- 24: Blechschicht
- 25: Zahnkranz
- 26: Schwungrad
- 30: Sandwichbauteil

## Patentansprüche

1. Verfahren zur Herstellung eines insbesondere für ein Kraftfahrzeug vorgesehenen Schwungrads, **dadurch gekennzeichnet, dass** man ein Dämpfungsblechteil (16) aus einem Verbundwerkstoff umfassend eine Schicht aus Stahlblech und eine viskoelastische Dämmschicht in einem Fügeprozess unter Druck mit einem für das Schwungrad vorgesehenen metallischen Basiselement (10) dauerhaft fest zu einem Sandwichbauteil (30) verbindet.

2. Verfahren nach Anspruch 1, **dadurch gekennzeichnet, dass** man zunächst das metallische Basiselement (10) mindestens teilweise entsprechend der Form des Schwungrads vorformt sowie an diesem gegebenenfalls Lochungen (14) oder Ausstanzungen vornimmt, man das Dämpfungsblechteil (16) aus dem Verbundwerkstoff ebenfalls mindestens teilweise entsprechend der Form des Schwungrads vorformt und gegebenenfalls an diesem Lochungen (21) oder Ausstanzungen vornimmt und man dann beide Teile unter Druck miteinander fügt, wobei bei diesem Fügevorgang die viskoelastische Dämmschicht des Blechteils dem Basiselement zugewandt ist.

3. Verfahren nach Anspruch 1 oder 2, **dadurch gekennzeichnet, dass** der Fügevorgang von metallischem Basiselement (10) und Dämpfungsblechteil (16) aus Verbundwerkstoff eine geometrische Verformung des Basiselements und/oder des Dämpfungsblechteils umfasst.

4. Verfahren nach einem der Ansprüche 1 bis 3, **dadurch gekennzeichnet, dass** der Fügevorgang von metallischem Basiselement (10) und Dämpfungsblechteil (16) aus Verbundwerkstoff eine zusätzliche Fixierung beider Bauteile durch Einclipsen des Dämpfungsblechteils am metallischen Basiselement umfasst.

5. Verfahren nach einem der Ansprüche 1 bis 4, **dadurch gekennzeichnet, dass** der Fügevorgang von metallischem Basiselement (10) und Dämpfungsblechteil (16) aus Verbundwerkstoff eine zusätzliche Fixierung beider Bauteile durch Haltelaschen umfasst.

6. Verfahren nach einem der Ansprüche 1 bis 5, **dadurch gekennzeichnet, dass** der Fügevorgang von metallischem Basiselement (10) und Blechteil (16) aus Verbundwerkstoff ein Durchsetzfügen (Clinchen) umfasst.

7. Verfahren nach einem der Ansprüche 1 bis 6, **dadurch gekennzeichnet, dass** das metallische Basiselement (10) aus einem vorzugsweise unlegierten kaltumformbaren Stahlblech besteht.

8. Verfahren nach einem der Ansprüche 1 bis 7, **dadurch gekennzeichnet, dass** die viskoelastische Dämmschicht des Dämpfungsblechteils (16) ein Polyacrylatharz umfasst.

9. Verfahren nach einem der Ansprüche 1 bis 8, **dadurch gekennzeichnet, dass** bei dem Fügeprozess mindestens ein Anpressdruck von etwa 2 bar auf die zu verbindenden Bauteile (10, 16) ausgeübt wird.

10. Verfahren nach einem der Ansprüche 1 bis 9, **dadurch gekennzeichnet, dass** nach dem Fügeprozess an dem Schwungrad (16) ein äußerer Zahnkranz (25) angebracht wird.

11. Für einen Anlasser eines Kraftfahrzeugs vorgesehenes Schwungrad, **dadurch gekennzeichnet, dass** dieses nach einem Verfahren gemäß einem der Ansprüche 1 bis 10 hergestellt ist.

12. Schwungrad nach Anspruch 11, **dadurch gekennzeichnet, dass** dieses für ein Kraftfahrzeug mit Start/Stopp-Automatik vorgesehen ist.
